# EUROPÄISCHE PATENTSCHRIFT

(11) **EP 2 934 807 B1**
(45) Veröffentlichungstag und Bekanntmachung des Hinweises auf die Patenterteilung: **15.06.2016**
(21) Anmeldenummer: 14720492.9
(22) Anmeldetag: 29.04.2014
(51) Int. Cl.: B23K 15/00, B23K 26/00, F15B 15/14

(54) **ANTRIEBSEINHEIT EINES FLUIDBETÄTIGTEN LINEARANTRIEBES UND VERFAHREN ZUR IHRER HERSTELLUNG**
DRIVE UNIT OF A FLUID-ACTUATED LINEAR DRIVE AND METHOD FOR THE PRODUCTION THEREOF
UNITÉ D'ENTRAÎNEMENT D'UN ENTRAÎNEMENT LINÉAIRE ACTIONNÉ PAR UN FLUIDE ET PROCÉDÉ POUR SA FABRICATION

(30) Priorität: 16.05.2013 DE 102013008408
(43) Veröffentlichungstag der Anmeldung: 28.10.2015
(73) Patentinhaber: Festo AG & Co. KG, 73734 Esslingen (DE)
(72) Erfinder: JENE, Tobias, 66564 Ottweiler (DE); SAUER, Werner, 66636 Tholey (DE); BUCHHEIT, Christof, 66292 Riegelsberg (DE)
(74) Vertreter: Patentanwälte Magenbauer & Kollegen Partnerschaft mbB
(86) Internationale Anmeldenummer: PCT/EP2014/001146
(87) Internationale Veröffentlichungsnummer: WO 2014/183835

(56) Entgegenhaltungen:
- EP-A1- 1 503 114
- EP-A1- 2 703 653
- DE-A1-102009 014 817

## Beschreibung

Die Erfindung betrifft eine Antriebseinheit eines fluidbetätigten Linearantriebes, mit einer Kolbenstange, einem koaxial auf der Kolbenstange sitzenden ringförmigen Antriebskolben und einer axial im Anschluss an den Antriebskolben ebenfalls koaxial auf der Kolbenstange sitzenden, für Endlagendämpfungszwecke dienenden Pufferhülse, wobei diese Komponenten unter Mitwirkung einer Schweißverbindung aneinander befestigt sind.

Die Erfindung betrifft ferner einen mit einer solchen Antriebseinheit ausgestatteten fluidbetätigten Linearantrieb.

Schließlich betrifft die Erfindung auch ein Verfahren zur Herstellung einer Antriebseinheit eines fluidbetätigten Linearantriebes, die eine Kolbenstange, einen koaxial auf der Kolbenstange sitzenden ringförmigen Antriebskolben und eine axial im Anschluss an den Antriebskolben ebenfalls koaxial auf der Kolbenstange sitzende, für Endlagendämpfungszwecke dienende Pufferhülse aufweist, wobei diese Komponenten unter Mitwirkung einer Schweißverbindung aneinander befestigt sind.

Ein derartiger Stand der Technik ist aus der EP 1 503 114 B1 bekannt, wobei ein auf eine Kolbenstange aufgeschobener ringförmiger Antriebskolben zwischen zwei Halteringen axial unbeweglich eingespannt ist, die den Antriebskolben axial beidseits flankieren und jeweils mittels einer zur Kolbenstange konzentrischen Laserschweißnaht mit der Kolbenstange verschweißt sind. Alternativ kann sich der Antriebskolben einerseits an einer Abstufung der Kolbenstange abstützen, so dass er lediglich auf der anderen Seite mittels eines an die Kolbenstange angeschweißten Halteringes fixiert wird. Eine zu Endlagendämpfungszwecken dienende Pufferhülse ist auf die Kolbenstange aufgeschoben und mit einem der Halteringe verrastet. Die Montage der Pufferhülse erfolgt hierbei nach dem Herstellen der Schweißverbindung zwischen dem Haltering und der Kolbenstange.

Die bekannte Antriebseinheit lässt sich vorteilhaft herstellen, weil die Möglichkeit besteht, durch beliebige Wahl des Ortes der Schweißverbindung die axiale Position des Antriebskolbens bezüglich der Kolbenstange variabel vorzugeben. Auf diese Weise kann unterschiedlichen Kundenanforderungen äußerst flexibel Rechnung getragen werden. Gleichwohl ergibt sich weiterhin ein nicht unerheblicher Zeitaufwand für die Montage der Pufferhülse, die nach dem Anschweißen eines Halteringes auf die Kolbenstange aufgesteckt und mit dem Haltering verrastet wird.

Aus der DE 101 41 560 A1 gehen ein fluidbetätigter Arbeitszylinder und ein Verfahren zu dessen Herstellung hervor, wobei ein Kolben auf die Kolbenstange aufgesteckt und durch eine Nietverbindung oder Schweißverbindung direkt an der Kolbenstange angebracht ist bzw. wird. Der Kolben kann insbesondere durch eine Reibschweißverbindung an der Kolbenstange fixiert sein.

Die DE 40 22 447 A1 offenbart einen fluidbetätigten Arbeitszylinder, bei dem ein Zylinderdeckel über eine Reibschweißung stoffschlüssig mit dem Zylinderrohr verbunden ist.

Der Erfindung liegt die Aufgabe zugrunde, Maßnahmen vorzuschlagen, die eine variable und zugleich kostengünstige Herstellung einer eine Kolbenstange, einen Antriebskolben und mindestens eine Pufferhülse aufweisenden Antriebseinheit gestatten.

Diese Aufgabe wird bei einer Antriebseinheit der eingangs genannten Art dadurch gelöst, dass der Antriebskolben, die Pufferhülse und die Kolbenstange durch ein und dieselbe gemeinsame Schweißverbindung aneinander befestigt sind.

Weiterhin wird die Aufgabe durch einen fluidbetätigten Linearantrieb gelöst, der über ein Antriebsgehäuse und eine diesbezüglich axial bewegbare Antriebseinheit verfügt, wobei die Antriebseinheit in dem vorgenannten Sinne ausgebildet ist und der Antriebskolben in dem Antriebsgehäuse linear verschiebbar angeordnet ist.

Desweiteren wird die Aufgabe in Verbindung mit einem Verfahren der eingangs genannten Art dadurch gelöst, dass der Antriebskolben und die Pufferhülse auf die zuvor bereitgestellte Kolbenstange aufgeschoben und anschließend unter Ausbildung einer gemeinsamen Schweißverbindung miteinander und außerdem auch mit der Kolbenstange verschweißt werden.

Auf diese Weise lässt sich der gewünschte feste Zusammenhalt der Kolbenstange, des Antriebskolbens und einer Pufferhülse mittels ein und derselben Schweißverbindung realisieren. Diese als "gemeinsame Schweißverbindung" bezeichnete Schweißverbindung sorgt dafür, dass sowohl der Antriebskolben mit der Pufferhülse verschweißt ist als auch diese beiden Komponenten mit der Kolbenstange verschweißt sind. Somit erübrigen sich zusätzliche spezielle Haltekörper zur Fixierung des Antriebskolbens. Außerdem kann auf spezielle Verbindungseinrichtungen zur Befestigung der Pufferhülse verzichtet werden. Mit ein und demselben Schweißvorgang können alle drei Komponenten aneinander befestigt werden, was kurze Fertigungszeiten und dementsprechend eine kostengünstige Produktion gestattet.

Vorteilhafte Weiterbildungen der Erfindung gehen aus den Unteransprüchen hervor.

Wenn die Antriebseinheit für einen fluidbetätigten Linearantrieb vorgesehen ist, bei dem in beiden Bewegungsrichtungen der Antriebseinheit eine Endlagendämpfung gewünscht ist, kann die Antriebseinheit über zwei Pufferhülsen verfügen, wobei der ringförmige Antriebskolben axial zwischen den beiden Pufferhülsen angeordnet ist. In diesem Fall ist zweckmäßigerweise jede der beiden Pufferhülsen mit mittels einer eigenen gemeinsamen Schweißverbindung mit sowohl dem Antriebskolben als auch der Kolbenstange verschweißt. Mithin befindet sich auf beiden Axialseiten des Antriebskolbens jeweils eine der beiden gemeinsamen Schweißverbindungen.

Im Einsatz der Antriebseinheit bei einem fluidbetätigten Linearantrieb hat die Pufferhülse den Zweck, zu einer fluidischen Endlagendämpfung beizutragen, wenn die Antriebseinheit sich an eine Endlage annähert. Die Pufferhülse taucht dann in eine Öffnung einer Abschlusswand des Linearantriebes ein, um diese ganz oder teilweise zu verschließen, so dass ein von dem Antriebskolben verdrängtes Fluid nur mehr gedrosselt abströmen kann, was eine Verlangsamung der Hubbewegung der Antriebseinheit bewirkt. Je nachdem, ob eine solche Endlagendämpfung bei nur einer oder bei beiden Bewegungsrichtungen der Antriebseinheit gewünscht ist, kann die Antriebseinheit mit nur einer Pufferhülse oder mit zwei Pufferhülsen ausgestattet sein.

Die gemeinsame Schweißverbindung lässt sich besonders gut ausbilden, wenn der Antriebskolben an der der Pufferhülse zugewandten Stirnseite einen zur Kolbenstange konzentrischen axialen Befestigungsvorsprung aufweist, an dem die benachbarte Pufferhülse axial anliegt, wobei die gemeinsame Schweißverbindung im Übergangsbereich zwischen dem Befestigungsvorsprung und der Pufferhülse ausgebildet ist bzw. wird. Der Schweißvorgang wird insbesondere im an den Befestigungsvorsprung anliegenden Zustand der Pufferhülse ausgeführt. Die Schweißverbindung erstreckt sich zwischen dem Befestigungsvorsprung und der Pufferhülse hindurch bis in das Material der Kolbenstange hinein. Es werden also Materialbereiche des Befestigungsvorsprunges, der Pufferhülse und der Kolbenstange aufgeschmolzen und stoffschlüssig miteinander verbunden. Zweckmäßigerweise entspricht der Außendurchmesser des Befestigungsvorsprunges dem Außendurchmesser des ihm zugewandten axialen Endabschnittes der Pufferhülse.

Die gemeinsame Schweißverbindung wird zweckmäßigerweise mittels einer zu der Kolbenstange konzentrischen Schweißnaht realisiert, die eine fluiddichte Verbindung zwischen dem Antriebskolben und der Kolbenstange liefert, so dass im Betrieb der Antriebseinheit in dem zwischen dem Antriebskolben und der Kolbenstange liegenden Bereich kein Druckmedium zwischen den beiden Axialseiten des Antriebskolbens überströmen kann. Vorzugsweise beschränkt sich die gemeinsame Schweißverbindung auf eine einzige ringförmige Schweißnaht. Die Schweißverbindung bzw. Schweißnaht wird zweckmäßigerweise durch Laserstrahlschweißen oder Elektronenstrahlschweißen realisiert. Vorzugsweise kommt dabei kein Zusatzmaterial zur Anwendung, so dass die von der gemeinsamen Schweißverbindung erfassten drei Komponenten direkt miteinander verschweißt werden.

Zumindest in den an der gemeinsamen Schweißverbindung beteiligten Bereichen bestehen die miteinander verschweißten Komponenten vorzugsweise aus Metall, insbesondere aus Edelstahl oder aus Aluminiummaterial. Von Vorteil ist es, wenn zumindest die Kolbenstange und/oder jede vorhandene Pufferhülse komplett aus Metall besteht. Wenn die Pufferhülse aus Metall besteht, ist sie insbesondere als Tiefziehteil ausgebildet.

Der Antriebskolben verfügt zweckmäßigerweise über einen aus Metall bestehenden Kolbenkörper, der an jeder gemeinsamen Schweißverbindung beteiligt ist. Er kann einteilig oder auch mehrteilig ausgeführt sein und trägt zweckmäßigerweise mindestens ein Dichtungselement, das im Gebrauch der Antriebseinheit mit Dichtkontakt gleitverschieblich an einem Antriebsgehäuse des fluidbetätigten Linearantriebes anliegt.

Vor allem um Material und Gewicht einzusparen, kann die Kolbenstange rohrförmig ausgebildet sein. Ein geringes Gewicht erlaubt einen energiesparenden Betrieb und bei Bedarf hohe Beschleunigungswerte.

An der gemeinsamen Schweißverbindung sind zweckmäßigerweise ausschließlich die Kolbenstange, der Antriebskolben und eine Pufferhülse beteiligt. Zusätzliche Teile werden nicht benötigt.

Zweckmäßigerweise hat die Kolbenstange über ihre gesamte Länge hinweg einen konstanten Außendurchmesser, der dem Innendurchmesser des ringförmigen Antriebskolbens entspricht, so dass letzterer bei der Montage auf der Kolbenstange in jede gewünschte Position verschoben und dort im Rahmen einer gemeinsamen Schweißverbindung fixiert werden kann. Mithin kann der Antriebskolben in Abhängigkeit von der Länge des zugeordneten Linearantriebes individuell variabel an der Kolbenstange befestigt werden.

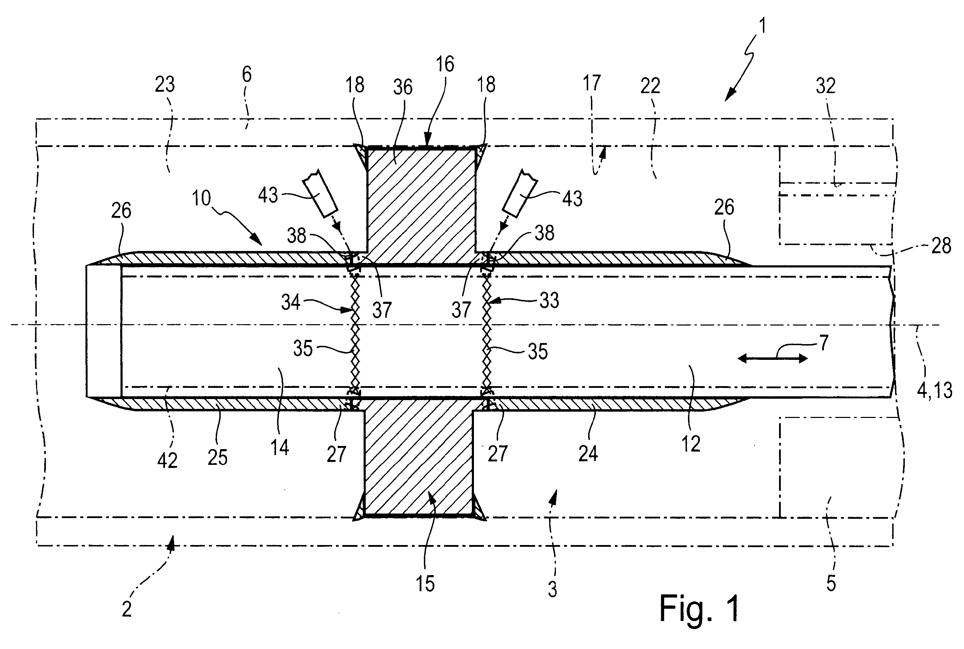

Nachfolgend wird die Erfindung anhang der beiliegenden Zeichnung näher erläutert. Die einzige Figur (Fig. 1) zeigt einen Längsschnitt durch einen den Antriebskolben aufweisenden Endabschnitt einer bevorzugten Ausführungsform der erfindungsgemäßen Antriebseinheit, wobei strichpunktiert weitere Komponenten eines mit der Antriebseinheit ausgestatteten fluidbetätigten Linearantriebes angedeutet sind.

Die Fig. 1 zeigt einen teilweise strichpunktierten Ausschnitt eines fluidbetätigten Linearantriebes 1 erfindungsgemäßen Aufbaus, der mit einer vorteilhaft aufgebauten erfindungsgemäßen Antriebseinheit 10 ausgestattet ist. Diese Antriebseinheit 10 ist mittels des erfindungsgemäßen Verfahrens hergestellt.

Der fluidbetätigte Linearantrieb 1 enthält ein Antriebsgehäuse 2, in dessen Innern sich ein Gehäuse-Innenraum 3 mit länglicher Gestalt befindet. Das Antriebsgehäuse 2 hat eine gedachte Längsachse 4.

An seinen beiden axial orientierten Stirnseiten verfügt das Antriebsgehäuse 2 über je eine Abschlusswand 5, wobei in der Zeichnung nur eine der beiden Abschlusswände 5 illustriert ist. Peripher ist der Gehäuse-Innenraum 3 von einem sich zwischen den beiden Abschlusswänden 5 erstreckenden Rohrabschnitt 6 des Antriebsgehäuses 2 begrenzt.

Der Linearantrieb 1 verfügt außerdem über die schon erwähnte Antriebseinheit 10, die unter Ausführung einer durch einen Doppelpfeil angedeuteten linearen Hubbewegung 7 relativ zum Antriebsgehäuse 2 in Achsrichtung der Längsachse 4 bewegbar ist.

Die Antriebseinheit 10 enthält eine Kolbenstange 12 mit einer Längsachse 13. Im zusammengebauten Zustand des Linearantriebes 1 erstreckt sich ein im Folgenden als Antriebsabschnitt 14 bezeichneter Längenabschnitt der Kolbenstange 12 in dem Gehäuse-Innenraum 3. Mindestens eine der Abschlusswände 5 hat eine Wanddurchbrechung 28, die von der Kolbenstange 12 axial durchsetzt ist, so dass sich ein nicht weiter illustrierter Abtriebs-Endabschnitt der Kolbenstange 12 außerhalb des Antriebsgehäuses 2 befindet, wo er mit einer geeigneten Schnittstelle ausgestattet ist, die die Befestigung eines zu bewegenden Bauteils ermöglicht.

Beim Ausführungsbeispiel ist nur eine der beiden Abschlusswände 5 von der Kolbenstange 12 durchsetzt und die nicht abgebildete andere Abschlusswand 5 ist verschlossen. Hiervon abweichend kann die Kolbenstange 12 aber auch durchgehend ausgebildet sein, so dass sie beide Abschlusswände 5 durchsetzt, wobei dann der Antriebsabschnitt 14 von einem mittleren Längenabschnitt der Kolbenstange 12 gebildet ist. Im montierten Zustand des Linearantriebes 1 fallen die Längsachsen 4, 13 des Antriebsgehäuses 2 und der Kolbenstange 12 zusammen.

Auf dem Antriebsabschnitt 14 der Kolbenstange 12 sitzt konzentrisch ein ringförmiger Antriebskolben 15. Dieser ist mit der Kolbenstange 12 fest verbunden. Mit seiner radial nach außen orientierten Außenumfangsfläche 16 liegt der Antriebskolben 15 bei zusammengebautem Linearantrieb 1 gleitverschieblich an der Innenumfangsfläche 17 des Rohrabschnittes 6 an. Zweckmäßigerweise enthält der Antriebskolben 15 mindestens ein bevorzugt aus Material mit gummielastischen Eigenschaften bestehendes Dichtungselement 18, das unter Abdichtung gleitverschieblich an der Innenumfangsfläche 17 anliegt. Durch den Antriebskolben 15 wird der Gehäuse-Innenraum 3 axial in zwei Arbeitskammern 22, 23 unterteilt, die an ihrer entgegengesetzten Seite von jeweils einer der beiden Abschlusswände 5 begrenzt sind.

Im Betrieb des Linearantriebes 1 kann jede Arbeitskammer 22, 23 wahlweise mit einem fluidischen Druckmedium beaufschlagt oder druckmäßig entlastet werden. Hierzu dienen das Antriebsgehäuse 2 durchsetzende Fluidkanäle, die nicht weiter abgebildet sind. Auf diese Weise ist eine gesteuerte Fluidbeaufschlagung des Antriebskolbens 15 möglich, um die Hubbewegung 7 in der einen oder anderen Hubrichtung zu erzeugen. Das Druckmedium ist bevorzugt Druckluft.

Im Rahmen der Hubbewegung 7 kann die Antriebseinheit 10 zwischen zwei Endlagen bewegt werden, in denen sich der Antriebskolben 15 an jeweils eine der beiden Abschlusswände 5 angenähert hat und daran insbesondere zur Anlage gelangt ist. Um einen harten Aufprall des Antriebskolbens 5 bei Erreichen seiner Endlagen zu vermeiden, ist die Antriebseinheit 10 zusätzlich zur Kolbenstange 12 und zum Antriebskolben 15 mit zwei Pufferhülsen 24, 25 ausgestattet, die eine fluidische Endlagendämpfung bewirken.

Die beiden Pufferhülsen 24, 25, die im Folgenden auch als erste und zweite Pufferhülsen 24, 25 bezeichnet werden, sind koaxial auf dem Antriebsabschnitt 14 der Kolbenstange 12 angeordnet, und zwar auf einander axial entgegengesetzten Seiten des Antriebskolbens 15. Der Antriebskolben 15 wird also quasi auf axial entgegengesetzten Seiten von den beiden Pufferhülsen 24, 25 flankiert. Die Pufferhülsen 24, 25 sind fest mit dem Antriebskolben 15 verbunden.

Jede Pufferhülse 24, 25 hat einen vom Antriebskolben 15 wegweisenden vorderen Endabschnitt 26 und einen dem Antriebskolben 15 zugewandten hinteren Endabschnitt 27. Ihr Außendurchmesser ist kleiner als derjenige des Antriebskolbens 15. Am vorderen Endabschnitt 26 verjüngt sich jede Pufferhülse 24, 25 zweckmäßigerweise nach vorne hin.

Es ist auch eine Ausführungsform der Antriebseinheit 10 möglich, die mit nur einer einzigen Pufferhülse ausgestattet ist. Dies ist dann der Fall, wenn bei nur einer Hubrichtung der Antriebseinheit 10 eine Endlagendämpfung gewünscht ist.

Damit die Pufferhülsen 24, 25 eine Endlagendämpfung bewirken können, ist die einer Pufferhülse 24, 25 gegenüberliegende Abschlusswand 5 des Antriebsgehäuses 2 mit einer im Folgenden als Dämpfungsöffnung 28 bezeichneten Öffnung versehen, die koaxial zur zugeordneten Pufferhülse 24, 25 ausgerichtet ist und die so ausgebildet ist, dass die zugeordnete Pufferhülse 24, 25 unter teilweisem oder vollständigem Verschließen des Öffnungsquerschnittes in die Dämpfungsöffnung 28 eintauchen kann, wenn sich die Antriebseinheit 10 der zugehörigen Endlage annähert.

Bei Ausführung der Hubbewegung 7 verdrängt der Antriebskolben 15 aus derjenigen Arbeitskammer 22, 23, in deren Richtung er sich momentan verlagert, das darin befindliche Druckmedium durch die zugeordnete Dämpfungsöffnung 28 hindurch. Wenn sich die Antriebseinheit 10 ausreichend weit in ihre Endlage angenähert hat, taucht die voreilende Pufferhülse 24 oder 25 in die Dämpfungsöffnung 28 ein und begrenzt oder verschließt dadurch den dem verdrängten Druckmedium zur Verfügung stehenden Ausströmquerschnitt. Somit kann das eingeschlossene Druckmedium nur mehr gedrosselt durch einen mit der gleichen Arbeitskammer 22, 23 wie die Dämpfungsöffnung 28 kommunizierenden Drosselkanal 32 hindurch ausströmen, wobei die zur Verfügung stehende Strömungsrate erheblich reduziert ist, so dass die Antriebseinheit 10 abgebremst wird. Der Drosselkanal 32 kann beispielsweise im Antriebsgehäuse 2 oder auch in der Pufferhülse 24, 25 ausgebildet sein.

Ein vorteilhafter Aufbau der Antriebseinheit 10 sieht vor, dass der Antriebskolben 15, die erste Pufferhülse 24 und die Kolbenstange 12 durch ein und dieselbe gemeinsame Schweißverbindung 33 aneinander befestigt sind. Ebenso sind der Antriebskolbens 15, die zweite Pufferhülse 25 und die Kolbenstange 12 durch ein und dieselbe weitere gemeinsame Schweißverbindung 34 aneinander befestigt. Diese beiden gemeinsamen Schweißverbindungen 33, 34 sollen im Folgenden auch als erste gemeinsame Schweißverbindung 33 und als zweite gemeinsame Schweißverbindung 34 bezeichnet werden. Jede Pufferhülse 24, 25 ist also mittels einer eigenen gemeinsamen Schweißverbindung 33, 34 mit einerseits dem Antriebskolben 15 und andererseits der Kolbenstange 12 verschweißt.

Es versteht sich, dass in einem Falle, in dem die Antriebseinheit 10 über lediglich eine einzige axial im Anschluss an den Antriebskolben 15 auf der Kolbenstange 12 sitzende Pufferhülse 24, 25 verfügt, nur eine einzige gemeinsame Schweißverbindung 33 oder 34 vorhanden ist. Mit dem Begriff "gemeinsame" Schweißverbindung soll zum Ausdruck gebracht werden, dass der Antriebskolben 15 und die betreffende Pufferhülse 24 oder 25 nicht gesondert und unabhängig voneinander mit der Kolbenstange 12 verschweißt sind, sondern durch ein und denselben Schweißvorgang.

Bevorzugt weist jede gemeinsame Schweißverbindung 33, 34 eine zu der Kolbenstange 12 konzentrische fluiddichte Schweißnaht 35 auf, durch die sowohl der Antriebskolben 15 mit der Pufferhülse 24 bzw. 25 verschweißt ist als auch zugleich eine Verschweißung mit der Kolbenstange 12 stattfindet.

Durch die fluiddichte Schweißnaht 35 wird eine fluiddichte gemeinsame Schweißverbindung 33, 34 erzeugt, so dass ein Fluidübertritt zwischen den beiden Arbeitskammern 22, 23 zwischen den miteinander verschweißten Komponenten hindurch ausgeschlossen ist.

Die gemeinsame Schweißverbindung 33, 34 ist zweckmäßigerweise eine Laserstrahl-Schweißverbindung oder eine Elektronenstrahl-Schweißverbindung. Vorzugsweise ist die gemeinsame Schweißverbindung 33, 34 ohne Zusatzmaterial ausgeführt und basiert auf einem direkten stoffschlüssigen Verbinden von geschmolzenen Bestandteilen der miteinander verschweißten Komponenten.

Der Antriebskolben 15 setzt sich zweckmäßigerweise aus mehreren Komponenten zusammen. Exemplarisch enthält er einen an jeder gemeinsamen Schweißverbindung 33, 34 beteiligten Kolbenkörper 36, der das mindestens eine Dichtungselement 18 trägt. Der Kolbenkörper 36 ist beim Ausführungsbeispiel einteilig ausgebildet, kann jedoch auch mehrteilig ausgeführt sein.

Die durch die gemeinsame Schweißverbindung 33, 34 aneinander befestigten Komponenten der Antriebseinheit 10 bestehen zweckmäßigerweise zumindest in den unmittelbar an der Schweißverbindung teilhabenden Bereichen aus Metall. Besonders zweckmäßig ist es, wenn die Kolbenstange 12 und/oder jede Pufferhülse 24, 25 vollständig aus Metall bestehen. Beim Ausführungsbeispiel ist sowohl die Kolbenstange 12 wie auch jede Pufferhülse 24, 25 ein Metallteil und besteht zweckmäßigerweise aus Edelstahl oder Aluminiummaterial.

Für die Pufferhülsen 24, 25 empfiehlt sich insbesondere eine Herstellung als Tiefziehteil aus Edelstahl.

Bei dem Antriebskolben 15 des Ausführungsbeispiels besteht der Kolbenkörper 36 in seiner Gesamtheit aus Metall.

Die gemeinsame Schweißverbindung 33, 34 lässt sich besonders einfach ausbilden, wenn der Antriebskolben 15 an der jeder Pufferhülse 24, 25 zugewandten Stirnseite einen zur Kolbenstange 12 konzentrischen axialen Befestigungsvorsprung 37 aufweist, an dem die jeweils benachbarte Pufferhülse 24, 25 axial anliegt. Der ringförmige Befestigungsvorsprung 37 ist zweckmäßigerweise ein einstückiger Bestandteil des Kolbenkörpers 36. Vorzugsweise ragt er kragenförmig axial vom Kolbenkörper 36 weg.

Die gemeinsame Schweißverbindung 33, 34 ist im Kontaktbereich 38 zwischen jeder Pufferhülse 24, 25 und dem Antriebskolben 15 ausgebildet, wobei der Kontaktbereich 38 eine ringförmige, zur Kolbenstange 12 konzentrische Gestalt hat. Exemplarisch ist der Kontaktbereich 38 durch die aneinander anliegenden Stirnflächen des ringförmigen Befestigungsvorsprunges 37 und der zugewandten Stirnfläche des hinteren Endabschnittes 27 der zugeordneten Pufferhülse 24, 25 gebildet.

Jede gemeinsame Schweißverbindung 33, 34 erstreckt sich im zugeordneten Kontaktbereich 38 zwischen den beiden aneinander anliegenden Komponenten 15/24 bzw. 15/25 hindurch und bis in die Kolbenstange 12 bzw. deren Material hinein. Im Bereich der gemeinsamen Schweißverbindung 33, 34 sind also aneinander angrenzende Bereiche des Antriebskolbens 15, der Kolbenstange 12 und einer Pufferhülse 24 bzw. 25 aufgeschmolzen und gehen eine stoffschlüssige Verbindung ein.

Der Außendurchmesser des Befestigungsvorsprunges 37 entspricht zweckmäßigerweise dem Außendurchmesser des ihm zugewandten hinteren Endabschnittes 27 der Pufferhülse 24, 25.

Der Innendurchmesser des Antriebskolbens 15 und der beiden Pufferhülsen 24, 25 entspricht zweckmäßigerweise dem Außendurchmesser der Kolbenstange 12 im Bereich des Antriebsabschnittes 14. Vorzugsweise hat die Kolbenstange 12 über ihre gesamte Länge hinweg den gleichen Außendurchmesser.

Die Kolbenstange 12 besteht beim Ausführungsbeispiel aus Vollmaterial. Allerdings kann sie in vorteilhafter Weise auch rohrförmig ausgebildet sein, was strichpunktiert bei 42 angedeutet ist. Eine hohle Kolbenstange 42 zeichnet sich durch ein geringes Gewicht und einen reduzierten Materialbedarf aus. Außerdem kann der Hohlraum bei Bedarf zur Mediumhindurchführung genutzt werden, beispielsweise mittels durch die Kolbenstange hindurch verlegter Kabel oder Schläuche. Der Hohlraum in der Kolbenstange 12 kann auch für den Einbau von Sensoren oder von Betätigungselementen für Sensoren genutzt werden.

Bei einem bevorzugten Verfahren zur Herstellung der Antriebseinheit 10 werden der Antriebskolben 12 und mindestens eine Pufferhülse 24, 25 auf die Kolbenstange 12 aufgeschoben und am gewünschten Befestigungsort positioniert. Dabei werden der Antriebskolben 15 und die betreffende mindestens eine Pufferhülse 24, 25 axial zur gegenseitigen Anlage gebracht, so dass sie in dem Kontaktbereich 38 jeweils aneinander anliegen. Anschließend wird mittels eines Schweißgerätes 43 in dem Kontaktbereich 38 von radial außen her die umlaufende Schweißnaht 35 erzeugt, wobei zweckmäßigerweise das Schweißgerät 43 rings um die Antriebseinheit 10 herumgeführt wird.

Wenn die Antriebseinheit 10 mit zwei Pufferhülsen 24, 25 ausgestattet werden soll, werden die Schweißnähte 35 für die beiden gemeinsamen Schweißverbindungen 33, 34 entweder zeitlich nacheiander oder - mittels mehrerer Schweißgeräte 43 - zeitgleich erzeugt.

Dadurch, dass sich die Schweißnaht 35 jeder gemeinsamen Schweißverbindung 33, 34 rings um die Kolbenstange 12 herum erstreckt und ununterbrochen rings um eine geschlossene Schweißverbindung zwischen dem Antriebskolben 15, der zugeordneten Pufferhülse 24 oder 25 und der Kolbenstange 12 herstellt, kann auf ein zusätzliches Dichtungsmittel, z.B. ein Dichtungsring, zwischen der Kolbenstange 12 und den darauf sitzenden Komponenten 15, 24, 25 verzichtet werden.

Zweckmäßigerweise enthält jede gemeinsame Schweißverbindung 33, 34 nur eine einzige, rings um in sich geschlossene fluiddichte Schweißnaht 35.

## Patentansprüche

1. Antriebseinheit eines fluidbetätigten Linearantriebes, mit einer Kolbenstange (12), einem koaxial auf der Kolbenstange (12) sitzenden ringförmigen Antriebskolben (15) und einer axial im Anschluss an den Antriebskolben (15) ebenfalls koaxial auf der Kolbenstange (12) sitzenden, für Endlagendämpfungszwecke dienenden Pufferhülse (24), wobei diese Komponenten (15, 12, 24) unter Mitwirkung einer Schweißverbindung aneinander befestigt sind, **dadurch gekennzeichnet, dass** der Antriebskolben (15), die Pufferhülse (24) und die Kolbenstange (12) durch ein und dieselbe gemeinsame Schweißverbindung (33) aneinander befestigt sind.

2. Antriebseinheit nach Anspruch 1, **dadurch gekennzeichnet, dass** auf der Kolbenstange zwei den Antriebskolben (15) auf einander axial entgegengesetzten Seiten flankierende Pufferhülsen (24, 25) sitzen, wobei jede Pufferhülse (24, 25) mit dem Antriebskolben (15) und der Kolbenstange (12) mittels einer eigenen gemeinsamen Schweißverbindung (33, 34) fest verbunden ist.

3. Antriebseinheit nach Anspruch 1 oder 2, **dadurch gekennzeichnet, dass** der Antriebskolben (15) an der der Pufferhülse (24, 25) zugewandten Stirnseite einen zur Kolbenstange (12) konzentrischen axialen Befestigungsvorsprung (37) aufweist, an dem die benachbarte Pufferhülse (24, 25) axial anliegt, wobei die gemeinsame Schweißverbindung (33, 34) im Übergangsbereich zwischen dem Befestigungsvorsprung (37) und der Pufferhülse (24, 25) ausgebildet ist und sich zwischen diesen beiden Komponenten (37, 24, 25) hindurch bis in die Kolbenstange (12) hinein erstreckt, wobei der Außendurchmesser des Befestigungsvorsprunges (37) zweckmäßigerweise dem Außendurchmesser des ihm zugewandten axialen Endabschnittes (27) der Pufferhülse (24, 25) entspricht.

4. Antriebseinheit nach einem der Ansprüche 1 bis 3, **dadurch gekennzeichnet, dass** die gemeinsame Schweißverbindung (33, 34) eine zu der Kolbenstange (12) konzentrische, fluiddichte Schweißnaht (35) aufweist, durch die sowohl der Antriebskolben (15) mit der Pufferhülse (24, 25) verschweißt ist als auch zugleich diese beiden Komponenten (15, 24, 25) mit der Kolbenstange (12) verschweißt sind.

5. Antriebseinheit nach einem der Ansprüche 1 bis 4, **dadurch gekennzeichnet, dass** die gemeinsame Schweißverbindung (33, 34) eine Laserstrahl-Schweißverbindung oder eine Elektronenstrahl-Schweißverbindung ist.

6. Antriebseinheit nach einem der Ansprüche 1 bis 5, **dadurch gekennzeichnet, dass** die gemeinsame Schweißverbindung (33, 34) ohne Zusatzmaterial direkt zwischen den verschweißten Komponenten (12, 15, 24, 25) ausgebildet ist.

7. Antriebseinheit nach einem der Ansprüche 1 bis 6, **dadurch gekennzeichnet, dass** die durch die gemeinsame Schweißverbindung (33, 34) aneinander befestigten Komponenten (12, 15, 24, 25) zumindest in den an der Schweißverbindung beteiligten Bereichen aus Metall bestehen.

8. Antriebseinheit nach einem der Ansprüche 1 bis 7, **dadurch gekennzeichnet, dass** zumindest die Kolbenstange (12) und/oder jede Pufferhülse (24, 25) aus Metall besteht.

9. Antriebseinheit nach einem der Ansprüche 1 bis 8, **dadurch gekennzeichnet, dass** der Antriebskolben (15) einen ein- oder mehrteiligen, aus Metall bestehenden Kolbenkörper (36) aufweist, der an der gemeinsamen Schweißverbindung (33, 34) beteiligt ist und der zweckmäßigerweise mindestens ein Dichtungselement (18) trägt.

10. Antriebseinheit nach einem der Ansprüche 1 bis 9, **dadurch gekennzeichnet, dass** die Kolbenstange (12) rohrförmig ausgebildet ist.

11. Fluidbetätigter Linearantrieb, mit einem Antriebsgehäuse (2) und einer diesbezüglich axial bewegbaren Antriebseinheit (10) nach einem der Ansprüche 1 bis 10, wobei der Antriebskolben (15) in dem Antriebsgehäuse (2) linear verschiebbar angeordnet ist.

12. Verfahren zur Herstellung einer Antriebseinheit (10) eines fluidbetätigten Linearantriebes (1), die eine Kolbenstange (12), einen koaxial auf der Kolbenstange (12) sitzenden ringförmigen Antriebskolben (15) und eine axial im Anschluss an den Antriebskolben (15) ebenfalls koaxial auf der Kolbenstange (12) sitzende, für Endlagendämpfungszwecke dienende Pufferhülse (24) aufweist, wobei diese Komponenten (12, 15, 24) unter Mitwirkung einer Schweißverbindung aneinander befestigt sind, **dadurch gekennzeichnet, dass** der Antriebskolben (15) und die Pufferhülse (24) auf die zuvor bereitgestellte Kolbenstange (12) aufgeschoben und anschließend unter Ausbildung einer gemeinsamen Schweißverbindung (33) miteinander und außerdem auch mit der Kolbenstange (12) verschweißt werden.

13. Verfahren nach Anspruch 12, **dadurch gekennzeichnet, dass** auf die Kolbenstange (12) zwei Pufferhülsen (24, 25) derart aufgeschoben werden, dass sie den Antriebskolben (15) auf einander axial entgegengesetzten Zeiten flankieren, wobei jede Pufferhülse (24, 25) mit dem Antriebskolben (15) und der Kolbenstange (12) unter Ausbildung einer eigenen gemeinsamen Schweißverbindung (33, 34) verschweißt wird.

14. Verfahren nach Anspruch 12 oder 13, **dadurch gekennzeichnet, dass** die gemeinsame Schweißverbindung (33, 34) mittels einer zu der Kolbenstange (12) konzentrischen, fluiddichten Schweißnaht (35) erzielt wird, mittels der sowohl der Antriebskolben (15) mit der Pufferhülse (24, 25) verschweißt wird als auch zugleich diese beiden Komponenten (15, 24, 25) mit der Kolbenstange (12) verschweißt werden.

15. Verfahren nach einem der Ansprüche 12 bis 14, **dadurch gekennzeichnet, dass** die gemeinsame Schweißverbindung (33, 34) als Laserstrahl-Schweißverbindung oder Elektronenstrahl-Schweißverbindung ausgeführt wird.

## Claims

1. Drive unit of a fluid-actuated linear drive, comprising a piston rod (12), an annular drive piston (15) mounted coaxially on the piston rod (12) and a buffer sleeve (24) axially adjoining the drive piston (15) and likewise mounted coaxially on the piston rod (12) for the purpose of cushioning, the components (15, 12, 24) being secured to one another assisted by a welded joint, **characterised in that** the drive piston (15), the buffer sleeve (24) and the piston rod (12) are secured to one another by one and the same welded joint (33).

2. Drive unit according to claim 1, **characterised in that** two buffer sleeves (24, 25) flanking the drive piston (15) on axially opposite sides are mounted on the piston rod, each buffer sleeve (24, 25) being permanently joined to the drive piston (15) and the piston rod (12) by means of a distinct common welded joint (33, 34).

3. Drive unit according to claim 1 or 2, **characterised in that** the piston rod (12) has, on the end face facing the buffer sleeve (24, 25), an axial mounting projection (37), which is concentric with the piston rod (12) and against which the adjacent buffer sleeve (24, 25) bears axially, wherein the common welded joint (33, 34) is formed in the transitional region between the mounting projection (37) and the buffer sleeve (24, 25) and extends between these two components (37, 24, 25) into the piston rod (12), the outside diameter of the mounting projection (37) expediently corresponding to the outside diameter of the facing axial end section (27) of the buffer sleeve (24, 25).

4. Drive unit according to any of claims 1 to 3, **characterised in that** the common welded joint (33, 34) has a fluid-tight weld seam (35), which is concentric with the piston rod (12) and by means of which the drive piston (15) is welded to the buffer sleeve (24, 25) and these two components (15, 24, 25) are welded to the piston rod (12).

5. Drive unit according to any of claims 1 to 4, **characterised in that** the common welded joint (33, 34) is a laser beam-welded joint or an electron beam-welded joint.

6. Drive unit according to any of claims 1 to 5, **characterised in that** the common welded joint (33, 34) is formed directly between the welded components (12, 15, 24, 25) without any auxiliary material.

7. Drive unit according to any of claims 1 to 6, **characterised in that** the components (12, 15, 24, 25) secured to one another by the common welded joint (33, 34) are made of metal at least in the regions involved in the welded joint.

8. Drive unit according to any of claims 1 to 7, **characterised in that** at least the piston rod (12) and/or each buffer sleeve (24, 25) is/are made of metal.

9. Drive unit according to any of claims 1 to 8, **characterised in that** the drive piston (15) has a single- or multi-part metal piston body (36), which is involved in the common welded joint (33, 34) and which expediently supports at least one sealing element (18).

10. Drive unit according to any of claims 1 to 9, **characterised in that** the piston rod (12) is tubular.

11. Fluid-actuated linear drive comprising a drive housing (2) and a drive unit (10) according to any of claims 1 to 10, the drive piston (15) being capable of linear displacement in the drive housing (2).

12. Method for producing a drive unit (10) of a fluid-actuated linear drive, which comprises a piston rod (12), an annular drive piston (15) mounted coaxially on the piston rod (12) and a buffer sleeve (24) axially adjoining the drive piston (15) and likewise mounted coaxially on the piston rod (12) for the purpose of cushioning, the components (15, 12, 24) being secured to one another assisted by a welded joint, **characterised in that** the drive piston (15) and the buffer sleeve (24) are pushed onto the previously provided piston rod (12) and then welded to one another and to the piston rod (12) while a common welded joint (33) is formed.

13. Method according to claim 12, **characterised in that** two buffer sleeves (24, 25) are pushed onto the piston rod (12) in such a way that they flank the drive piston (15) on axially opposite sides, wherein each of the buffer sleeves (24, 25) is welded to the drive piston (15) and the piston rod (12) while a common welded joint (33, 34) is formed.

14. Method according to claim 12 or 13, **characterised in that** the common welded joint (33, 34) is is obtained by means of a fluid-tight weld seam (35), which is concentric with the piston rod (12) and by means of which the drive piston (15) is welded to the buffer sleeve (24, 25) and these two components (15, 24, 25) are welded to the piston rod (12).

15. Method according to any of claims 12 to 14, **characterised in that** the common welded joint (33, 34) is a laser beam-welded joint or an electron-beam welded joint.

## Revendications

1. Unité d'entraînement d'un entraînement linéaire actionné par un fluide, avec une tige de piston (12), un piston d'entraînement (15) annulaire reposant coaxialement sur la tige de piston (12) et un boisseau de tampon (24) servant à amortir la position finale reposant aussi coaxialement sur la tige de piston (12) de manière axiale à la suite du piston d'entraînement (15), ces composants (15, 12, 24) étant fixés les uns aux autres avec la coopération d'une soudure, **caractérisée en ce que** le piston d'entraînement (15), le boisseau de tampon (24) et la tige de piston (12) sont fixés les uns aux autres par une seule et même soudure commune (33).

2. Unité d'entraînement selon la revendication 1, **caractérisée en ce que** reposent sur la tige de piston deux boisseaux de tampon (24, 25) qui flanquent le piston d'entraînement (15) sur des côtés axialement opposés l'un à l'autre, chaque boisseau de tampon (24, 25) étant relié fixement au piston d'entraînement (15) et à la tige de piston (12) au moyen d'une soudure commune (33, 34).

3. Unité d'entraînement selon la revendication 1 ou 2, **caractérisée en ce que** le piston d'entraînement (15), au niveau de la face terminale tournée vers le boisseau de tampon (24, 25), comprend une saillie de fixation (37) axiale concentrique par rapport à la tige de piston (12), contre laquelle est plaqué axialement le boisseau de tampon adjacent (24, 25), la soudure commune (33, 34) étant formée dans la zone de transition entre la saillie de fixation (37) et le boisseau de tampon (24, 25) et s'étendant entre ces deux composants (37, 24, 25) jusqu'à l'intérieur de la tige de piston (12), le diamètre extérieur de la saillie de fixation (37) correspondant de manière appropriée au diamètre extérieur de la section finale axiale (27) tournée vers lui du boisseau de tampon (24, 25).

4. Unité d'entraînement selon l'une des revendications 1 à 3, **caractérisée en ce que** la soudure commune (33, 34) comprend un cordon de soudure (35) étanche aux fluides concentrique par rapport à la tige de piston (12), par l'intermédiaire duquel non seulement le piston d'entraînement (15) est soudé au boisseau de tampon (24, 25), mais ces deux composants (15, 24, 25) sont aussi soudés en même temps à la tige de piston (12).

5. Unité d'entraînement selon l'une des revendications 1 à 4, **caractérisée en ce que** la soudure commune (33, 34) est une soudure par rayon laser ou une soudure par rayon électronique.

6. Unité d'entraînement selon l'une des revendications 1 à 5, **caractérisée en ce que** la soudure commune (33, 34) est formée directement entre les composants soudés (12, 15, 24, 25), sans matériau d'addition.

7. Unité d'entraînement selon l'une des revendications 1 à 6, **caractérisée en ce que** les composants fixés les uns aux autres (12, 15, 24, 25) par la soudure commune (33, 34) sont en métal au moins dans les zones coopérant à la soudure.

8. Unité d'entraînement selon l'une des revendications 1 à 7, **caractérisée en ce qu'**au moins la tige de piston (12) et/ou chaque boisseau de tampon (24, 25) est en métal.

9. Unité d'entraînement selon l'une des revendications 1 à 8, **caractérisée en ce que** le piston d'entraînement (15) présente un corps de piston (36) en métal composé d'une ou de plusieurs parties, qui coopère à la soudure commune (33, 34) et porte de manière appropriée au moins un élément d'étanchéité (18).

10. Unité d'entraînement selon l'une des revendications 1 à 9, **caractérisée en ce que** la tige de piston (12) est formée tubulaire.

11. Entraînement linéaire actionné par un fluide, avec un boîtier d'entraînement (2) et une unité d'entraînement (10) mobile axialement par rapport à celui-ci selon l'une des revendications 1 à 10, le piston d'entraînement (15) étant agencé déplaçable de manière linéaire dans le boîtier d'entraînement (2).

12. Procédé de fabrication d'une unité d'entraînement (10) d'un entraînement linéaire (1) actionné par un fluide, qui comprend une tige de piston (12), un piston d'entraînement (15) annulaire reposant coaxialement sur la tige de piston (12) et un boisseau de tampon (24) servant à amortir la position finale reposant aussi coaxialement sur la tige de piston (12) de manière axiale à la suite du piston d'entraînement (15), ces composants (12, 15, 24) étant fixés les uns aux autres avec la coopération d'une soudure, **caractérisé en ce que** le piston d'entraînement (15) et le boisseau de tampon (24) sont engagés sur la tige de piston (12) préalablement mise à disposition, puis soudés l'un à l'autre en formant une soudure commune (33) et également soudés à la tige de piston (12).

13. Procédé selon la revendication 12, **caractérisé en ce que** deux boisseaux de tampon (24, 25) sont engagés sur la tige de piston (12) de telle sorte qu'ils flanquent le piston d'entraînement (15) sur des côtés axialement opposés l'un à l'autre, chaque boisseau de tampon (24, 25) étant soudé au piston d'entraînement (15) et à la tige de piston (12) en formant une soudure commune (33, 34).

14. Procédé selon la revendication 12 ou 13, **caractérisé en ce que** la soudure commune (33, 34) est obtenue au moyen d'un cordon de soudure (35) étanche aux fluides concentrique par rapport à la tige de piston (12), au moyen duquel non seulement le piston d'entraînement (15) est soudé au boisseau de tampon (24, 25), mais ces deux composants (15, 24, 25) sont aussi soudés en même temps à la tige de piston (12).

15. Procédé selon l'une des revendications 12 à 14, **caractérisé en ce que** la soudure commune (33, 34) est réalisée en tant que soudure par rayon laser ou soudure par rayon électronique.
